# EUROPÄISCHE PATENTSCHRIFT

(11) **EP 2 193 589 B1**
(45) Veröffentlichungstag und Bekanntmachung des Hinweises auf die Patenterteilung: **13.03.2019**
(21) Anmeldenummer: 08803517.5
(22) Anmeldetag: 02.09.2008
(51) Int. Cl.: H02J 7/34, B60T 8/172, B60L 11/00, B60L 11/18

(54) **ELEKTRISCHES ANTRIEBSSYSTEM eines Schienenfahrzeugs mit elektrochemischen und elektrischem Energiespeicher**
Electric drive system of an electric railroad comprising an high energy and high power energy storage system
Système d'entraînement électrique d'un chemin de fer électrique comprenant des systèmes de stockage d'énergie à haute énergie et haute puissance

(30) Priorität: 27.09.2007 DE 102007046275
(43) Veröffentlichungstag der Anmeldung: 09.06.2010
(73) Patentinhaber: Siemens Mobility GmbH, 81739 München (DE)
(72) Erfinder: ECKERT, Peter, 91058 Erlangen (DE); KRISTEN, Günter, 91301 Forchheim (DE); MEINERT, Michael, 91056 Erlangen (DE); RECHENBERG, Karsten, 91077 Dormitz (DE)
(86) Internationale Anmeldenummer: PCT/EP2008/061545
(87) Internationale Veröffentlichungsnummer: WO 2009/043666

(56) Entgegenhaltungen:
- EP-A1- 1 424 494
- DE-A1- 19 903 427
- DE-A1-102006 010 713
- DE-B3-102005 061 830
- JP-A- 2001 260 718
- BONERT R ET AL: "SUPER-CAPACITORS FOR PEAK LOAD SHAVING OF BATTERIES" EPE '97. 7TH. EUROPEAN CONFERENCE ON POWER ELECTRONICS AND APPLICATIONS. TRONDHEIM, SEPT. 8 - 10, 1997; [EPE . EUROPEAN CONFERENCE ON POWER ELECTRONICS AND APPLICATIONS], BRUSSELS, EPE ASSOCIATION, B, Bd. 1, 8. September 1997 (1997-09-08), Seiten 1055-1060, XP000769079 ISBN: 978-90-75815-02-3

## Beschreibung

Die Erfindung betrifft ein elektrisches Antriebssystem eines Schienenfahrzeugs mit einem elektrischen Energiespeicher und einem elektrochemischen Energiespeicher, die parallel geschaltet sind. Ein solches elektrisches Antriebssystem ist in der deutschen Patentanmeldung 10 2007 032 776.7 beschrieben. Dabei wird durch die Verwendung von zwei unterschiedlichen Energiespeichertypen eine gute Energiespeicherung gewährleistet. Das gilt besonders für den Einsatz in einem Schienenfahrzeug, das zumindest über eine begrenzte Strecke ohne die Zuleitung elektrischer Energie über eine Oberleitung oder eine Stromschiene auskommen soll.

Aus der DE 199 03 427 A1 ist eine Einrichtung zur Ladung eines Kondensators bekannt. Die DE 10 2005 061 830 B3 beschreibt eine Backup Schaltung mit Ladungsspeicher und die DE 10 2006010 713 A1 ein Bordnetz für ein Fahrzeug. Ferner ist in Bonert et al. "Super-Capacitors for Peak Load Shaving of Batteries", EPE 97. 7th European Conference on Power Electronics and Applications, Sept. 9-10, 1997, Bd. 1, Seiten 1055-1060 ein Einsatz von elektrischen und elektrochemischen Energiespeichern beschrieben. Aus der EP1424494A1 ist ein Hybridantriebssystem bekannt, welches über einen elektrischen und elektrochemischen Energiespeicher verfügt.

Die JP2001260718A offenbart eine Parallelschaltung eines elektrischen und elektrochemischen Energiespeichers welche über eine Drossel an Schalteinrichtungen verbunden sind.

Ein geeigneter elektrischer Energiespeicher ist z. B. ein Kondensator, insbesondere ein so genannter Doppelschicht-Kondensator. Ein geeigneter elektrochemischer Energiespeicher ist z. B. eine handelsübliche Batterie, in der eine chemische Reaktion abläuft. Beispielsweise handelt es sich um eine Nickel-Cadmium-Batterie.

Beim Bekannten ist eine Energiemanagementeinheit vorgesehen, die den Energieaustausch zwischen einer Antriebseinheit und den Energiespeichern regelt. Beide vorhandenen Energiespeicher, der elektrische und der elektrochemische Energiespeicher, werden dabei in gleicher Weise herangezogen.

Der Erfindung liegt die Aufgabe zugrunde, die beiden vorhandenen Energiespeicher bei Beachtung ihrer unterschiedlichen Lade- und Entladecharakteristiken mit minimalem Schaltungsaufwand optimal auszunutzen.

Die Aufgabe wird gemäß der Erfindung durch den Gegenstand nach Patentanspruch 1 gelöst.

Das Bauteil ist erfindungsgemäß eine Diode.

Der elektrische Energiespeicher ist z. B. ein Doppelschicht-Kondensator und der elektrochemische Energiespeicher ist z. B. eine Batterie.

Mit dem Bauteil, das erfindungsgemäß eine Diode ist, wird vorteilhaft und in einfacher Weise ein Abfluss der Ladung des elektrischen Energiespeichers zum in der Regel weniger geladenen
elektrochemischen Energiespeicher verhindert. Dadurch ist es möglich, dass bei der Energieabgabe aus den Energiespeichern zunächst nur die Energie aus dem elektrischen Energiespeicher genutzt wird, bis er soweit entladen ist, dass seine Ladung der Ladung des elektrochemischen Energiespeichers entspricht.

Es wird der Vorteil erzielt, dass zunächst der elektrische Energiespeicher mit hoher maximaler Leistung für kurze Zeiträume den Bedarf deckt. Das ist sinnvoll, da der elektrische Energiespeicher schneller entladbar ist als der elektrochemische Energiespeicher, was eine Folge ihrer unterschiedlichen Lade- und Entladecharakteristiken ist. Der elektrochemische Energiespeicher dient dazu, größere Energiemengen bei geringerer maximaler Leistung über längere Zeit abzugeben bzw. aufzunehmen. Die beim Anfahren und Bremsen benötigte oder zu speichernde Energie (hohe Leistung über kurzen Zeitraum) ist dem elektrischen Energiespeicher zugeordnet. Die Energie für eine längere Fahrt ohne Zuleitung von außen (geringere Leistung über längere Zeit) ist dem elektrochemischen Energiespeicher zugeordnet. Da also der elektrochemische Energiespeicher für kurzzeitiges Laden und Entladen mit hohen Leistungen bzw. Strömen nicht herangezogen wird, wird seine Lebensdauer vorteilhaft deutlich verlängert.

Außerdem wird der Vorteil erzielt, dass trotz der unterschiedlichen Lade- und Entladecharakteristiken der Energiespeicher nur ein geringer apparativer Schaltungsaufwand erforderlich ist.

Bei der über das Bauteil entkoppelten Parallelschaltung geschieht die Energieflussaufteilung zwischen elektrochemischem und elektrischem Energiespeicher automatisch. Wenn das Spannungsniveau des elektrischen Energiespeichers höher als das Spannungsniveau des elektrochemischen Energiespeichers liegt, erfolgt der wesentliche Energiefluss (Speicherung und Entnahme) zum bzw. vom elektrischen Energiespeicher. Wenn das Spannungsniveau des elektrischen Energiespeichers niedriger als das Spannungsniveau des elektrochemischen Energiespeichers liegt, erfolgt der wesentliche Energiefluss (Speicherung und Entnahme) zum bzw. vom elektrochemischen Energiespeicher. Dabei wird beachtet, dass das Spannungsniveau des elektrischen Energiespeichers, z. B. eines Doppelschicht-Kondensators, im aufgeladenen Zustand größer ist als das Spannungsniveau des elektrochemischen Energiespeichers, z. B. einer Batterie, die Spannung aber beim Entladevorgang beim elektrischen Energiespeicher schneller abnimmt als beim elektrochemischen Energiespeicher, so dass sich die Spannungsverläufe über die Zeit kreuzen.

Beispielsweise liegt die maximale Spannung am elektrochemischen Energiespeicher zwischen 40 % und 70 % der maximalen Spannung am elektrischen Energiespeicher.

Erfindungsgemäß ist der elektrochemische Energiespeicher mit einer Aufladeeinrichtung verbunden.

Eine solche separate Aufladeeinrichtung ist erforderlich, damit die für das Entladen vorteilhafte Diode dem Aufladevorgang nicht im Wege steht.

Die Energiespeicher stehen erfindungsgemäß mit einem Spannungszwischenkreis eines Umrichters in Verbindung. Dabei ist es erforderlich, dass die Spannungsniveaus der beiden Energiespeicher an die Zwischenkreisspannung angepasst sind. Das wird durch den Einsatz eines Hoch-/Tiefsetzstellers oder durch eine direkte Anbindung erreicht.

Mit dem elektrischen Antriebssystem nach der Erfindung wird insbesondere der Vorteil erzielt, dass bei unterschiedlichen Lade- und Entladecharakteristiken der beiden vorhandenen Energiespeicher diese optimal eingesetzt werden können und dass trotzdem der apparative Schaltungsaufwand gering ist.

Ausführungsbeispiele des elektrischen Antriebssystems nach der Erfindung werden anhand der Zeichnung näher erläutert:
- Figur 1: zeigt zum Anschließen an einen Spannungszwischenkreis eines Umrichters einen elektrischen und einen elektrochemischen Energiespeicher und eine Aufladeeinrichtung.
- Figur 2: zeigt eine Variante der Schaltung nach Figur 1.
- Figur 3: zeigt eine Variante der Schaltung nach Figur 1, bei der eine Aufladeeinrichtung nicht erforderlich ist.
- Figur 4: zeigt eine Variante der Schaltung nach Figur 3.

In der Zeichnung haben gleiche Bauteile gleiche Bezugszeichen.

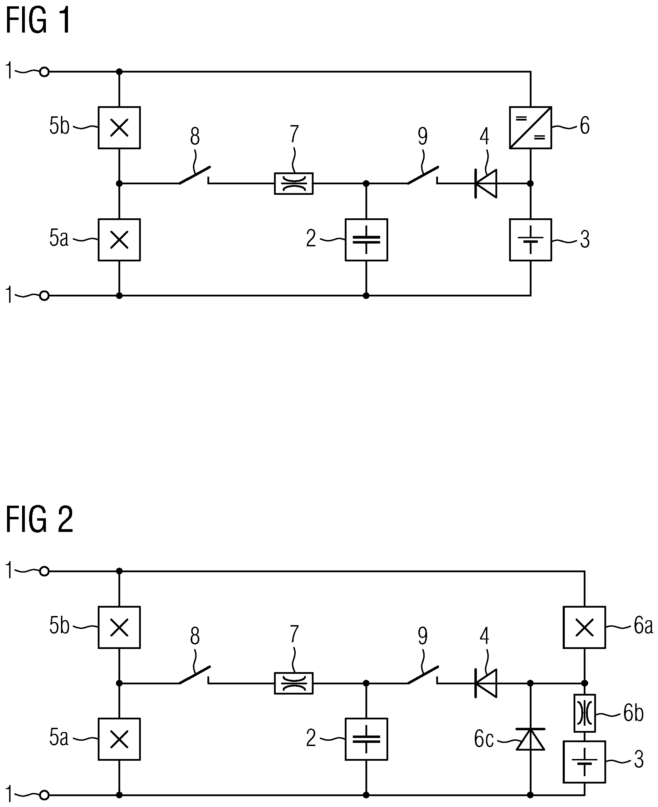

Nach Figur 1 stehen mit Anschlüssen 1 für einen Spannungszwischenkreis parallel geschaltete Energiespeicher 2, 3 in Verbindung. Dabei handelt es sich um einen elektrischen Energiespeicher 2, der z. B. ein Doppelschicht-Kondensator ist, und um einen elektrochemischen Energiespeicher 3, der z. B. eine Nickel-Cadmium-Batterie ist. In einer Verbindungsleitung zwischen dem elektrischen Energiespeicher 2 und dem elektrochemischen Energiespeicher 3 ist eine Diode 4 angeordnet mit Durchlassrichtung vom elektrochemischen Energiespeicher 3 weg. Durch die Diode 4 wird gezielt verhindert, dass der elektrochemische Energiespeicher 3 vom elektrischen Energiespeicher 2 aus aufgeladen wird. Es wird sichergestellt, dass mit der Entladung des elektrochemischen Energiespeichers 3 erst dann begonnen wird, wenn die verbleibende Ladung des elektrischen Energiespeichers 2 kleiner als die Ladung des elektrochemischen Energiespeichers 3 ist.

Zum gezielten Aufladen des elektrochemischen Energiespeichers 3 sind an den Anschlüssen 1 für den Spannungszwischenkreis in Serie zwei abschaltbare Bauteile 5a, 5b angeschlossen, von denen das eine Bauteil 5a mit den parallel geschalteten Energiespeichern 2, 3 in Verbindung steht und das andere Bauteil 5b mit einer Aufladeeinrichtung 6 verbunden ist. Die Aufladeeinrichtung 6 steht mit dem elektrochemischen Energiespeicher 3 in Verbindung und gewährleistet dessen Aufladung trotz der vorhandenen Diode 4. Die abschaltbaren Bauteile 5a, 5b, die z. B. abschaltbare Halbleiter mit Freilaufkreis sind, bilden in Verbindung mit einer Drossel 7 im Leitungskreis der Energiespeicher 2, 3 einen Hoch-/Tiefsetzsteller, mit dem das Spannungsniveau der Energiespeicher, das je nach Ladezustand stark variieren kann, an das Spannungsniveau des Spannungszwischenkreises angepasst wird.

In dem Leitungskreis der beiden Energiespeicher 2 und 3, der vom Bauteil 5a ausgeht, ist zum Abtrennen des gesamten Leitungskreises ein erster Schalter 8 vorhanden. Ein zweiter Schalter 9 dient zum gezielten Trennen der Verbindung zwischen dem elektrischen Energiespeicher 2 und dem elektrochemischen Energiespeicher 3.

Figur 2 zeigt eine Variante, bei der die Aufladeeinrichtung für den elektrochemischen Energiespeicher 3 aus einem abschaltbaren Bauelement 6a, das z. B. ein abschaltbarer Leistungshalbleiter mit Freilaufdiode ist, einer Drossel 6b und einer Diode 6c, die zusammen einen Tiefsetzsteller bilden, besteht. Dadurch wird eine gleichmäßigere Aufladung des elektrochemischen Energiespeichers 3 unter Umgehung der Diode 4 ermöglicht.

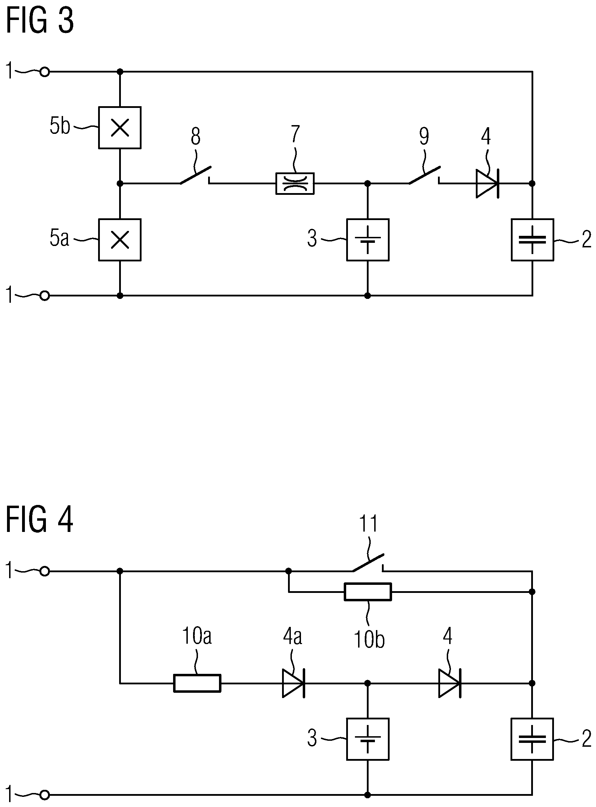

Bei einer Variante nach Figur 3 ist der elektrische Energiespeicher 2 unmittelbar mit den beiden Anschlüssen 1 für den Spannungszwischenkreis verbunden. Über eines der abschaltbaren Bauteile 5a steht der elektrochemische Energiespeicher 3, der parallel zum elektrischen Energiespeicher 2 geschaltet ist, mit den Anschlüssen 1 für den Spannungszwischenkreis in Verbindung. In der Verbindungsleitung zwischen den beiden Energiespeichern 2 und 3 ist die Diode 4 mit Durchlassrichtung vom elektrochemischen Energiespeicher 3 weg angeordnet. Sie erfüllt den gleichen Zweck wie in den anderen Ausführungsbeispielen.

Bei einer Variante nach Figur 4 sind keine abschaltbaren Bauteile erforderlich, da sowohl der elektrische Energiespeicher 2 als auch der elektrochemische Energiespeicher 3 über getrennte Ladewiderstände 10a, 10b mit dem gleichen Anschluss 1 für den Spannungszwischenkreis verbunden sind. Dabei kann dem einen Ladewiderstand 10a eine zweite Diode 4a zugeordnet sein und der andere Ladewiderstand 10b kann durch eine Bypassleitung, in der sich ein Schalter 11 befindet, überbrückt sein.

Mit der geschilderten Anbindung der beiden Energiespeicher 2 und 3 an den Spannungszwischenkreis wird mit geringem apparativem Schaltungsaufwand sichergestellt, dass stets zunächst der elektrische Energiespeicher 2 eingesetzt wird, wodurch der elektrochemische Energiespeicher 3 weniger belastet wird, was zu einer längeren Lebensdauer führt.

## Patentansprüche

1. Elektrisches Antriebssystem eines Schienenfahrzeugs, wobei das Antriebssystem einen elektrischen Energiespeicher (2) und einen elektrochemischen Energiespeicher (3) umfasst, die parallel geschaltet sind und mit einem Spannungszwischenkreis eines Umrichters in Verbindung stehen, wobei der elektrochemische Energiespeicher (3) mit einer Aufladeeinrichtung (6) verbunden ist,
wobei, im Leitungskreis des elektrischen Energiespeichers (2) und des elektrochemischen Energiespeichers (3) zur Bildung eines Hoch-/Tiefsetzstellers eine Drossel (7) und abschaltbare Bauteile (5a, 5b) angeordnet sind, um die Spannungsniveaus des elektrischen Energiespeichers (2) und des elektrochemischen Energiespeichers (3) an die Spannung des Spannungszwischenkreises anzupassen, wobei eines der abschaltbaren Bauteile (5a) mit dem elektrischen Energiespeicher (2) und dem elektrochemischen Energiespeicher (3) parallel geschaltet ist **dadurch gekennzeichnet dass**,
in einer Verbindungsleitung zwischen dem elektrischen Energiespeicher (2) und dem elektrochemischen Energiespeicher (3) ein Bauteil mit Durchlassrichtung vom elektrochemischen Energiespeicher (3) weg angeordnet ist, welches ein Aufladen des elektrochemischen Energiespeichers (3)vom elektrischen Energiespeicher (2) aus verhindert,
wobei das andere abschaltbare Bauteil (5b) mit der Aufladeeinrichtung (6) verbunden ist und wobei das Bauteil (4) mit Durchlassrichtung vom elektrochemischen Energiespeicher (3) weg eine Diode (4) ist.

2. Elektrisches Antriebssystem nach Anspruch 1 , **dadurch gekennzeichnet, dass** die maximale Spannung am elektrochemischen Energiespeicher (3) zwischen 40 % und 70 % der maximalen Spannung am elektrischen Energiespeicher (2) liegt.

## Claims

1. Electrical drive system of a rail vehicle, wherein the drive system comprises an electrical energy store (2) and an electrochemical energy store (3), which are connected in parallel and are connected to a voltage intermediate circuit of a converter, wherein the electrochemical energy store (3) is connected to a charging device (6), wherein an inductor (7) and components (5a, 5b) which can be switched off are arranged in the line circuit of the electrical energy store (2) and of the electrochemical energy store (3), in order to form a step-up/step-down converter, in order to adapt the voltage levels of the electrical energy store (2) and of the electrochemical energy store (3) to the voltage of the voltage intermediate circuit, wherein one of the components (5a) which can be switched off is connected in parallel with the electrical energy store (2) and the electrochemical energy store (3), **characterized in that** a component with a forward direction away from the electrochemical energy store (3) is arranged in a connecting line between the electrical energy store (2) and the electrochemical energy store (3) and prevents charging of the electrochemical energy store (3) from the electrical energy store (2), wherein the other component (5b) which can be switched off is connected to the charging device (6), and wherein the component (4) with a forward direction away from the electrochemical energy store (3) is a diode (4).

2. Electrical drive system according to Claim 1, **characterized in that** the maximum voltage across the electrochemical energy store (3) is between 40% and 70% of the maximum voltage across the electrical energy store (2).

## Revendications

1. Système d'entraînement électrique d'un véhicule ferroviaire, dans lequel le système d'entraînement comprend un accumulateur (2) d'énergie électrique et un accumulateur (3) d'énergie électrochimique, qui sont montés en parallèle et qui sont en liaison avec un circuit intermédiaire de tension d'un convertisseur, l'accumulateur (3) d'énergie électrochimique étant relié à un dispositif (6) de charge,
dans lequel,
dans le circuit de ligne de l'accumulateur (2) d'énergie électrique et de l'accumulateur (3) d'énergie électrochimique, sont montés, pour former un convertisseur élévateur/abaisseur, une bobine (7) de self et des composants (5a, 5b) pouvant être mis hors circuit, afin d'adapter le niveau de tension de l'accumulateur d'énergie électrique et de l'accumulateur (3) d'énergie électrochimique à la tension du circuit intermédiaire de tension, l'un des composants (5a) pouvant être mis hors circuit étant monté en parallèle avec l'accumulateur (2) d'énergie électrique et l'accumulateur (3) d'énergie électrochimique,
**caractérisé en ce que**
dans une ligne de liaison entre l'accumulateur (2) d'énergie électrique et l'accumulateur (3) d'énergie électrochimique, est monté un composant à sens de passage s'éloignant de l'accumulateur (3) d'énergie électrochimique, qui empêche une charge de l'accumulateur (3) d'énergie électrochimique par l'accumulateur (2) d'énergie électrique,
dans lequel
l'autre composant (5b) pouvant être mis hors circuit est relié au dispositif (6) de charge et dans lequel le composant (4) à sens de passage s'éloignant de l'accumulateur (3) d'énergie électrochimique est une diode (4).

2. Système d'entraînement électrique suivant la revendication 1, **caractérisé en ce que** la tension maximum aux bornes de l'accumulateur (3) d'énergie électrochimique est comprise entre 40% et 70% de la tension maximum de l'accumulateur (2) d'énergie électrique.
